# EUROPEAN PATENT APPLICATION

(11) **EP 4 711 607 A1**
(43) Date of publication of application: **18.03.2026**
(21) Application number: 24200530.4
(22) Date of filing: 16.09.2024
(51) Int. Cl.: F03D 1/06, F03D 80/40, H05B 3/34

(54) **A HEATING ELEMENT FOR A WIND TURBINE ROTOR BLADE**

(71) Applicant: Nordex Energy SE & Co. KG, 22419 Hamburg (DE)
(72) Inventor: Lipka, Thomas, 22419 Hamburg (DE); Kremer, Jochen, 22419 Hamburg (DE)
(74) Representative: Völkl Siebenson Patentanwälte - Partnerschaft mbB

(57) **Abstract**

A heating element for a wind turbine rotor blade comprising:
• a carrier layer,
• a heating conductor fastened to the carrier layer,
• wherein the heating conductor comprises a first end section which extends beyond an edge of the carrier layer, wherein the first end section is adapted to be connected to an electrical supply line of the wind turbine rotor blade, characterized in that
• the heating conductor is guided through an adjustment section in which the heating conductor is movably fastened to the carrier layer, thereby enabling an adjustment of a length of the first end section by shifting the heating conductor in the adjustment section with reference to the carrier layer along a longitudinal direction of the heating conductor.

## Description

The invention relates to a heating element for a wind turbine rotor blade.

EP 2 843 228 A1 discloses a wind turbine rotor blade with an electrical heating system including a plurality of electrical heating elements arranged on an outer surface of a wind turbine rotor blade. Each of the heating elements has a carrier layer and a heating conductor arranged on the carrier layer between two opposite edges of the heating element in a meandering pattern. The heating elements can be manufactured as flexible preforms having different shapes adapted to the respective surface areas of the wind turbine rotor blade that shall be heated. These preforms are arranged in position, adhered the outer surface of the wind turbine rotor blade and connected to electrical supply lines.

Departing therefrom, it is an object of the invention to provide a heating element for a wind turbine rotor blade that is easier to install, and a method of installing a heating element on a wind turbine rotor blade.

This problem is solved by the heating element for a wind turbine rotor blade with the features of claim 1. Advantages aspects of the invention are given in the dependent claims.

The heating element for a wind turbine rotor blade comprises:
- a carrier layer,
- a heating conductor fastened to the carrier layer,
- wherein the heating conductor comprises a first end section which extends beyond an edge of the carrier layer, wherein the first end section is adapted to be connected to an electrical supply line of the wind turbine rotor blade, wherein
- the heating conductor is guided through an adjustment section in which the heating conductor is movably fastened to the carrier layer, thereby enabling an adjustment of a length of the first end section by shifting the heating conductor in the adjustment section with reference to the carrier layer along a longitudinal direction of the heating conductor.

The heating element is designed for being arranged on a specified surface area of the wind turbine rotor blade. The geometry of the heating element generally corresponds to this surface area. The geometry may be rectangular or trapezoidal, for example, wherein the edges may be straight or curved. The heating element is a generally flat, flexible member, therefore sometimes referred to as a heating mat. A set of heating elements may be used in a heating system for a wind turbine rotor blade. The heating elements may be arranged side-by-side, and may have the same geometry or may have different geometries. The heating elements may be fastened to an outer surface of the wind turbine rotor blade, for example by means of an adhesive. However, it is also possible to place the heating element in a mold for manufacturing a wind turbine rotor blade shell member and to integrate the heating element into the shell member, for example by vacuum infusion of a resin.

When the heating element is arranged on the wind turbine rotor blade, the surface area of the wind turbine rotor blade covered by the heating element can be heated by a heating current supplied via the electrical supply line of the wind turbine rotor blade. A heating current flowing through the heating conductor will heat the heating element and the respective surface area of the wind turbine rotor blade in order to remove accumulated ice and/or in order to prevent the formation of ice on the surface area covered by heating element.

The electrical supply line of the wind turbine rotor blade is typically integrated into a wind turbine rotor blade shell member during production of the shell member. It may also be fastened to a wind turbine rotor blade shell member or to the wind turbine rotor blade at a later point in time. The electrical supply line may include one or more connection points for contacting the first end of the respective heating conductors. A connection point may comprise for example a metal block, a threading or a clamp.

The first end section of the heating conductor is connected to the electrical supply line. The same typically holds for a second end section of the heating conductor which will need to be connected to another electrical supply line of the wind turbine rotor blade, so that the heating current can flow through the heating conductor between the first end section and the second end section.

When the heating element is mounted to an outer surface of the wind turbine rotor blade, it is difficult to place the heating element exactly in a specified position, due to the large size of the wind turbine rotor blade and due to the size and flexibility of the heating element. The same is true for a heating element placed in a manufacturing mold for a wind turbine rotor blade shell member. Any deviations from the specified position of the heating element will add to manufacturing tolerances related to the position of the electrical supply line within the wind turbine rotor blade shell member and to the first end section in relation to the overall geometry of the heating element. This means that when the heating element is arranged in place, the position of the first end section of the heating conductor will typically deviate from the position of the electrical supply line.

When connecting the first end section to the electrical supply line, great care must be taken to ensure good contact and also to arrange the first end section lying flat on the outer surface of the wind turbine rotor blade. Should the first end section or any other section of the heating conductor project from the outer surface of the wind turbine rotor blade, it is likely that the heating conductor will be damaged in subsequent manufacturing steps or when in use. Further, the aerodynamic efficiency of the wind turbine rotor blade may be impaired by any elements projecting from the outer surface.

In theory, it may be an option to provide the heating elements with an extralong end section, so that after having arranged the heating element in position, the first end section may be shortened to the required length. However, this is labor-intensive and incompatible with heating conductors provided with preformed end sections. The inventors realized that an adjustable length of the first end section can be achieved when the heating conductor in an adjustment section is movably fastened to the carrier layer, so that a length of the first end section can be adjusted by shifting the heating conductor in the adjustment section with reference to the carrier layer along a longitudinal direction of the heating conductor. It is then conveniently possible to pull the first end section to the required extent out of the adjustment section and/or to push the first end section to the required extent further into the heating element. The length of the first end section which extends beyond an edge of the carrier layer can thereby be adjusted easily in both directions. This makes it easy to connect the first end section to the electrical supply line while achieving the desired, flat arrangement of the heating conductor including the first end section with reference to the outer surface of the wind turbine rotor blade.

Further, instead of fixedly attaching the entire heating conductor on to the adjustment section the heating conductor is movably fastened on to the carrier layer, which enables manual shifting of the heating conductor. At the same time, the movable fastening of the heating conductor is sufficient to hold the heating conductor within the adjustment section, as long as no significant external forces are applied to the heating conductor. During transportation and handling of the heating element, the relative position of the heating conductor to the carrier layer will be maintained also in the adjustment section.

In an aspect, a free end of the first end section is provided with a cable lug. The cable lug is fastened to the free end, for example by crimping, soldering, and/or gluing with an electrically conductive adhesive. By means of the cable lug, the connection of the first end section to the electrical supply line of the wind turbine rotor blade can be made by a fastening method, for example by forming a screw connection or by means of a rivet. In another aspect, the heating element with the cable lug can be prefabricated. Also, the first end section and the position of the cable lug can be adjusted as required.

In an aspect, the heating conductor comprises a main section which is immovably fastened to the carrier layer. In contrast to the movable fastening in the adjustment section, the heating conductor is securely fastened to the carrier layer in the main section so that the main section of the heating conductor is held at a place relative to the carrier layer, even when there is an influence of an external force. In particular, the position of the carrier layer in the main section will be maintained whenever the required adjustment of the position of the heating conductor within the adjustment section is carried out. In particular, shifting of the heating conductor within the main section may not be possible without damaging the heating conductor, the carrier layer and/or a connection means fastening the heating conductor to the carrier layer.

In an aspect, the heating conductor between the main section and the adjustment section comprises a curved section which is disposed unfastened on the carrier layer to enable change in the arrangement of the curved section with reference to the carrier layer when the heating conductor is shifted in the adjustment section. Where the heating conductor is disposed unfastened on the carrier layer, it may be possible not only to shift the heating conductor along its longitudinal direction, but also transverse to this direction. This means the shape and position of the curved section may be changed as required to allow shifting of the heating conductor in the adjustment section. Depending on the selected position of the heating conductor in the adjustment section, the length of the curved section may become longer or shorter. For example, the length of the first end section may be adjusted by as much as at least +/-10 mm, at least +/-20 mm, at least +/-30 mm or more.

In an aspect, the adjustment section comprises a proximate end near the end section and a distal end near the curved section. Between the proximal end and the distal end, the heating conductor in the adjustment section may follow a straight or almost straight path along which it can be shifted. However, it is also possible that the heating conductor within the adjustment section follows a curved path. To carry out the adjustment, the heating conductor may then be shifted along this curved path. The distal end of the adjustment section may be aligned with an edge of a carrier layer beyond which the first end section extends.

In an aspect, the heating conductor in the adjustment section is fastened to the carrier layer by stitching with a first yarn tension and/or a first spacing between neighboring stitches, which (the first yarn tension and/or the first spacing) are selected such that the heating conductor can be shifted along the longitudinal direction without damaging the carrier layer or the heating conductor. In other words, the yarn tension and/or the first spacing are selected such that the heating conductor is movably fastened on the carrier layer. The stitches may be carried out in a continuous or noncontinuous form, for example in a zig-zag pattern.

In an aspect, the heating conductor in the main section is fastened to the carrier layer in a meandering pattern. In this way, substantially the entire area covered by the heating layer is provided with segments of the heating conductor, so that a substantially uniform heat distribution is obtained. However, it is also possible to use more than one heating conductor on one heating element. In this case, the heating conductors may be connected to the electrical supply lines of the wind turbine rotor blade in parallel, possibly using a common first end section. Each of the heating conductors may be fastened to the carrier layer such that a partial area covered by the carrier layer is provided with the desired heating power.

In an aspect, the adjustment section is arranged near a midpoint of the edge of the carrier layer and approximately perpendicular to the edge of the carrier layer. In particular, the heating conductor within the adjustment section is arranged near the midpoint and approximately perpendicular to the edge of the carrier layer. Shifting of the heating conductor would then immediately help adjusting the first end section with reference to the electrical supply line. In particular, the main section may comprise at least one loop arranged on one side of the adjustment section and at least one loop arranged on a second, opposite side of the adjustment section. This allows placing of the first end section in the middle of the heating element (with reference to the edge, that is along a width direction of the heating element) and to have segments of sufficient length of the heating conductor to both sides of the adjustment section.

In an aspect, the heating conductor in the main section is fastened to the carrier layer by stitching with a second yarn tension larger than the first yarn tension and/or with a second spacing between neighboring stitches smaller than the first spacing. The fastening of the heating conductor made by stitching can in this way be changed from movably to immovably. This is a simple way to obtain the desired level of fastening in the adjustment section as well as in the main section, using the same technology which can be applied fully automatically.

In an aspect, the heating conductor is guided through at least one additional adjustment section in which the heating conductor is movably fastened to the carrier layer, and the heating conductor comprises at least one additional curved section which is disposed unfastened on the carrier layer enabling an arrangement of the at least one additional curved section capable of being modified with reference to the carrier layer when the heating conductor is shifted in the at least one additional adjustment section, wherein the heating conductor between the adjustment section and the at least one additional adjustment section is disposed unfastened on the carrier layer or is movably fastened to the carrier layer. By means of the additional adjustment section, even greater flexibility as to the length of the first end section is achieved.

In an aspect, the heating wire comprises a second end section which extends beyond an edge of the carrier layer and is adapted to be connected to an electrical supply line of the wind turbine rotor blade, wherein a length of the second end section can be adjusted. In particular, the heating element can be provided with an adjustment section for adjusting the length of the second end section similar to the first end section, as described above. This is particularly helpful when the heating element is arranged on the outer surface of the wind turbine rotor blade and/or connected thereto before both end sections are connected to the respective electrical supply lines.

In an aspect, the heating conductor comprises a metal heating wire. The cross-section of the metal heating wire and the electrical resistance of the selected metal can be selected such as to provide the required heating power at a given supply voltage.

In an aspect, the heating conductor comprises a bundle of carbon fibers. The bundle of carbon fibers may be a fiber roving. The cross-section may be selected to provide the required electrical properties.

In an aspect, the carrier layer comprises a fiber mesh. For this mesh, for example glass fibers may be used, but also any other fibers providing the required stability. Preferably, the fibers are electrically insulating fibers so that the heating current will flow in a defined manner exclusively through the heating conductor. Fiber mesh provides the required stability and shear stiffness helpful for handling of the heating element at low weight. The fiber mesh can also be mounted to the wind turbine rotor blade using proven technology such as lamination and/or vacuum infusion of a resin. In particular, the fiber mesh has a mesh size in the range of 1 mm to 10 mm, in particular in a range of 2 mm to 6 mm. This is a good compromise between stiffness and weight.

The above stated problem is also solved by the method of installing a heating element on the wind turbine rotor blade comprising the features of claim 15. With regard to the features and advantages of the method, reference is made to the above explanations of the heating element, which apply correspondingly.

In the following, the invention is described in greater detail with reference to embodiments shown in drawings. The figures show:
- Fig. 1: a heating element in a schematic drawing,
- Fig. 2: an enlarged section of Fig. 1,
- Fig. 3: an enlarged section of Fig. 2,
- Fig. 4: a section of another heating element in a schematic drawing,
- Fig. 5: a section of still another heating element in a schematic drawing,
- Fig. 6: a section of still another heating element in a schematic drawing,
- Fig. 7: a wind turbine rotor blade with a heating system shown in perspective in a schematic drawing.

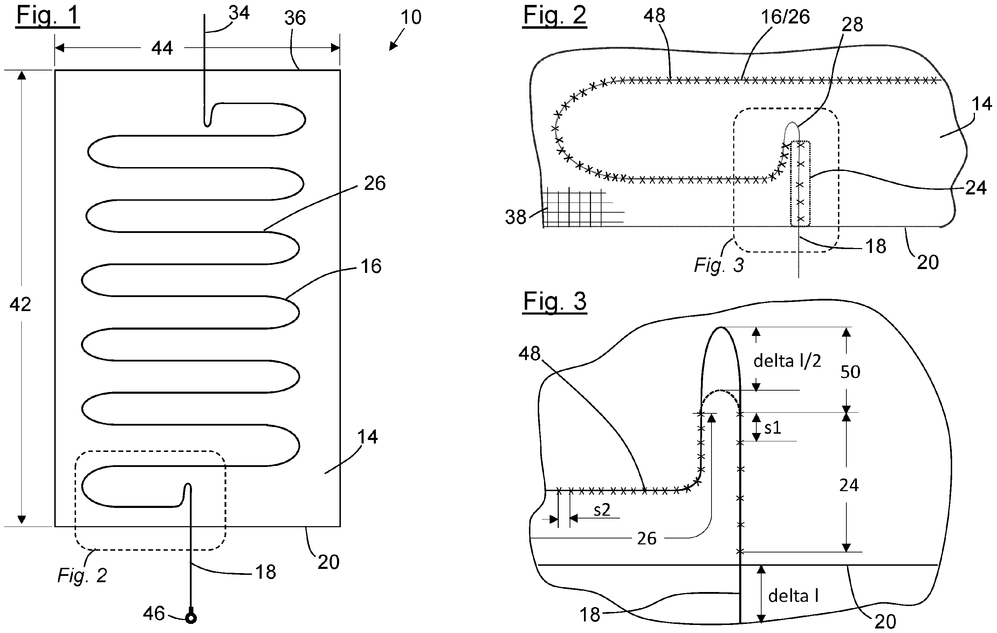

The heating element 10 of Fig. 1 has a carrier layer 14 defining an overall geometry of the heating element 10. The geometry is rectangular with a length 42 and a width 44. A first edge 20 and a second edge 36 extend in the width direction.

A heating conductor 16 is arranged on the carrier layer 14 and has a first end section 18 which extends beyond the first edge 20. The length of the first end section 18 is measured from the first edge 20 to a free end of the first end section 18 which is provided with a cable lug 46. A second end section 34 of the heating conductor 16 extends beyond the second edge 36. It is provided with a cable lug 46 as well (not shown).

A main section 26 of the heating conductor 16 is immovably fastened to carrier layer 14. It is arranged in a meandering pattern, so that so that heating power is distributed substantially over the entire area of the carrier layer 14.

Fig. 2 shows a bottom section of Fig. 1 in an enlarged view, including a part of the edge 20 and a section of the first end section 18 of the heating conductor 16. In an adjustment section 24, the heating conductor 16 is moveably fastened to the carrier layer 14. In the adjustment section 24, the heating conductor 16 is arranged along a straight line. The adjustment section 24 comprises a proximal end at the edge 20 (near the first end section 18), and a distal end near a curved section 28 of the heating conductor 16. The curved section 28 is disposed unfastened on the carrier layer 14. It describes a turn of approximately 180°. At the end of the curved section 28 away from the adjustment section 24, the main section 26 of the heating conductor 16 begins.

The main section 26 of the heating conductor 16 is immovably fastened to the carrier layer 14. The moveable fastening of the heating conductor 16 in the adjustment section 24 and the immoveable fastening of the heating conductor 16 in the main section 26 are carried out by means of various stitches 48 with a yarn. The carrier layer 14 comprises a fiber mesh 38 of glass fibers depicted only to the left of Fig. 2.

Fig. 3 shows a section of Fig. 2 in a further enlarged view. One can see that the stitching used in the adjustment section 24 has a first spacing s1 between adjacent stitches 48, and the stitching used in the main section 26 has a second, smaller spacing s2 between adjacent stitches 48. Further, the stitching in the adjustment section 24 uses a first yarn tension. In the main section 26, the stitching uses a second yarn tension which is larger that the first yarn tension.

When the position of the heating conductor 16 in the adjustment section 24 is shifted along the longitudinal direction of the heating conductor 16, the arrangement and length of the curved section 28 can be changed as indicated by the dashed line. The extension 50 of the curved section 28 can thereby be changed by delta l/2, so that the length of the first end section 18 changes approximately by delta 1.

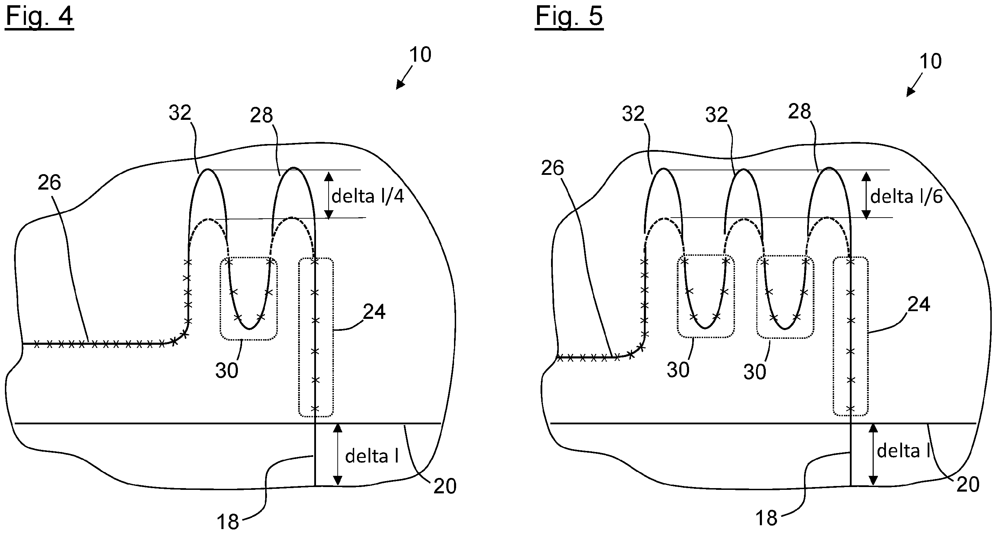

Fig. 4 shows an enlarged view of a section of another heating element 10. The heating element has an edge 20, a first end section 18, an adjustment section 24 and a curved section 28 similar to the heating element 10 of Figs. 1 to 3. In addition, an additional adjustment section 30 and an additional curved section 32 are arranged between the curved section 28 and the main section 26 of the heating conductor 16. This design requires an adjustment of each curved section by delta l/4 only to obtain an adjustment of the length of the first end section 18 by delta l, making it possible to find a particularly compact arrangement of the heating conductor 16.

Fig. 5 shows an enlarged view of a section of another heating element 10. It is identical to the embodiment of Fig. 4 with respect to the edge 20, the first end section 18, the adjustment section 24, the curved section 28 the additional adjustment section 30 and the additional curved section 32. In addition, it comprises one additional pair of an additional adjustment section 30 and an additional curved section 32 "connected in series" between the main section 26 and the additional curved section 32 maintained from the design of Fig. 4. Adjusting the extension of the curved section 28 and the additional curved sections 32 by delta l/6 is then sufficient to obtain an adjustment of the length of the first end section 18 by delta 1.

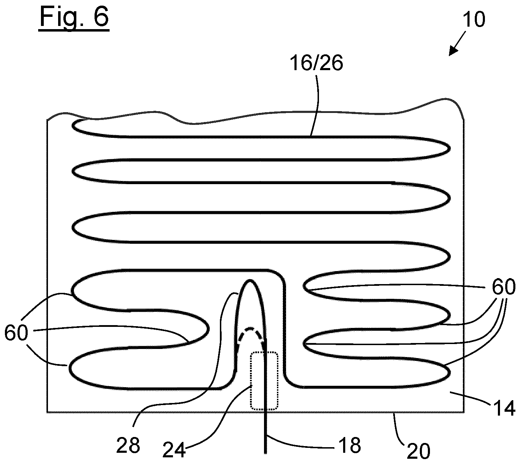

The heating element 10 of Fig. 6 has a carrier layer 14, an edge 20, a first end section 18, an adjustment section 24 and a curved section 28 similar to the heating element 10 of Figs. 1 to 3. The adjustment section 24 is arranged perpendicular to the edge 20 and near a midpoint of the edge 20. The main section 26 of the heating conductor 16 is arranged in a meandering pattern, wherein three loops 60 are formed to the left of the adjustment section 24 and four loops 60 are formed to the right of the adjustment section 24.

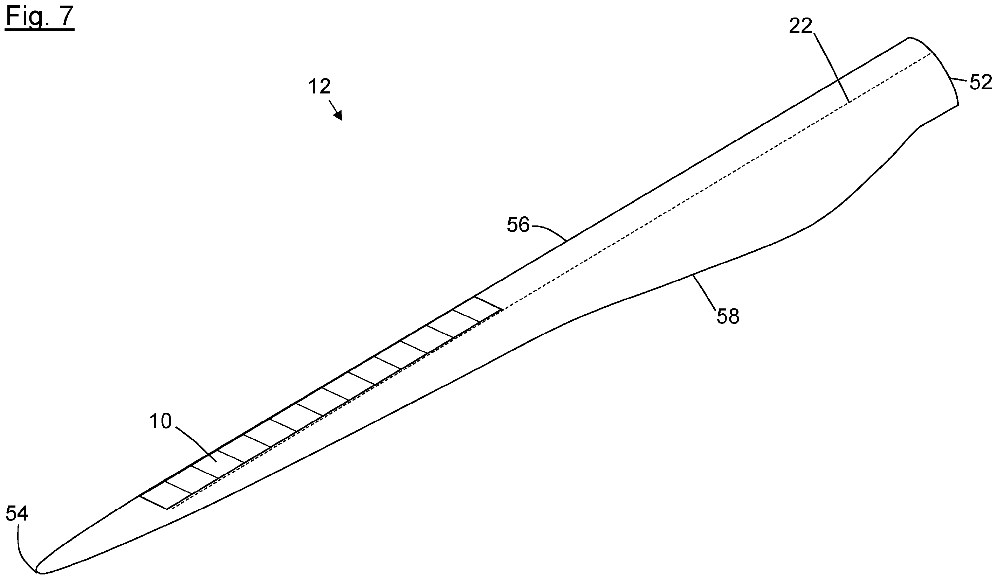

Fig. 7 shows a wind turbine rotor blade 12 with a blade root 52, a blade tip 54, a leading edge 56 and a trailing edge 58. The wind turbine rotor blade 12 is provided with a heating system comprising a plurality of heating elements 10. Two electrical supply lines 22 are integrated into the wind turbine rotor blade 12, each running along a longitudinal direction of the wind turbine rotor blade 12. Each of the heating elements 10 is connected to the electrical supply lines 22 by means of a first end section 18 and a second end section 34 (not shown in Fig. 7).

### List of reference numerals

- 10: heating element
- 12: wind turbine rotor blade
- 14: carrier layer
- 16: heating conductor
- 18: first end section
- 20: edge
- 22: supply line
- 24: adjustment section
- 26: main section
- 28: curved section
- 30: additional adjustment section
- 32: additional curved section
- 34: second end section
- 36: edge
- 38: fiber mesh
- 40: outer surface
- 42: length
- 44: width
- 46: cable lug
- 48: stitch
- 50: extension
- 52: blade root
- 54: blade tip
- 56: leading edge
- 58: trailing edge
- 60: loop
- s1: first spacing
- s2: second spacing

## Claims

1. A heating element (10) for a wind turbine rotor blade (12) comprising:
• a carrier layer (14),
• a heating conductor (16) fastened to the carrier layer (14),
• wherein the heating conductor (16) comprises a first end section (18) which extends beyond an edge (20) of the carrier layer (14), wherein the first end section (18) is adapted to be connected to an electrical supply line (22) of the wind turbine rotor blade (12), **characterized in that**
• the heating conductor (16) is guided through an adjustment section (24) in which the heating conductor (16) is movably fastened to the carrier layer (14), thereby enabling an adjustment of a length of the first end section (18) by shifting the heating conductor (16) in the adjustment section (24) with reference to the carrier layer (14) along a longitudinal direction of the heating conductor (16).

2. The heating element (10) of claim 1, wherein a free end of the first end section is provided with a cable lug (46).

3. The heating element (10) of claim 1 or 2, wherein the heating conductor (16) comprises a main section (26) which is immovably fastened to the carrier layer (14).

4. The heating element (10) of any of the claims 1 to 3, wherein the heating conductor (16) between the main section (26) and the adjustment section (24) comprises a curved section (28) which is disposed unfastened on the carrier layer (14) to enable change in the arrangement of the curved section (28) with reference to the carrier layer (14) when the heating conductor (16) is shifted in the adjustment section (24).

5. The heating element (10) of claim 4, wherein the adjustment section (24) comprises a proximal end near the end section and a distal end near the curved section (28).

6. The heating element (10) of any of the claims 1 to 5, wherein the heating conductor (16) in the adjustment section (24) is fastened to the carrier layer (14) by stitching with a first yarn tension and/or a first spacing (s1) between neighboring stitches, which are selected such that the heating conductor (16) can be shifted along the longitudinal direction without damaging the carrier layer (14) or the heating conductor (16). *(stitching e.g. in a zig-zag pattern)*

7. The heating element (10) of claim 6, wherein the heating conductor (16) in the main section (26) is fastened to the carrier layer (14) in a meandering pattern.

8. The heating element (10) of any of claim 7, wherein the adjustment section (24) is arranged near a midpoint of the edge (20) of the carrier layer (14) and approximately perpendicular to the edge (20) of the carrier layer (14).

9. The heating element (10) of any of the claims 6 to 8, wherein the heating conductor (16) in the main section (26) is fastened to the carrier layer (14) by stitching with a second yarn tension larger than the first yarn tension and/or with a second spacing (s2) between neighboring stitches smaller than the first spacing (s1).

10. The heating element (10) of any of the claims 1 to 9, wherein the heating conductor (16) is guided through at least one additional adjustment section (30) in which the heating conductor (16) is movably fastened to the carrier layer (14), and wherein the heating conductor (16) comprises at least one additional curved section (32) which is disposed unfastened on the carrier layer (14) enabling an arrangement of the at least one additional curved section (32) capable of being modified with reference to the carrier layer (14) when the heating conductor (16) is shifted in the at least one additional adjustment section (24), wherein the heating conductor (16) between the adjustment section (24) and the at least one additional adjustment section (24) is disposed unfastened on the carrier layer (14) or is movably fastened to the carrier layer (14).

11. The heating element (10) of any of the claims 1 to 10, wherein the heating conductor comprises a second end section (34) which extends beyond an edge (36) of the carrier layer (14) and is adapted to be connected to an electrical supply line (22) of the wind turbine rotor blade (12), wherein a length of the second end section (34) can be adjusted.

12. The heating element (10) of any of the claims 1 to 11, wherein the heating conductor (16) comprises a metal heating wire.

13. The heating element (10) of any of the claims 1 to 11, wherein the heating conductor (16) comprises a bundle of carbon fibers.

14. The heating element (10) of any of the claims 1 to 13, wherein the carrier layer (14) comprises a fiber mesh (38).

15. A method of installing a heating element (10) on a wind turbine rotor blade (12), the method comprising the following steps:
• providing a wind turbine rotor blade (12) comprising an electrical supply line (22),
• providing a heating element (10) with the features of any of the claims 1 to 14,
• arranging the heating element (10) on an outer surface (40) of the wind turbine rotor blade (12) in a defined position,
• adjusting the length of the first end section (18) by shifting the heating conductor (16) in the adjustment section (24) with reference to the carrier layer (14) along a longitudinal direction of the heating conductor (16), and
• connecting the first end section (18) to the supply line (22).
